# EUROPÄISCHE PATENTANMELDUNG

(11) **EP 1 235 025 A1**
(43) Veröffentlichungstag der Anmeldung: **28.08.2002**
(21) Anmeldenummer: 02001293.6
(22) Anmeldetag: 18.01.2002
(51) Int. Cl.: F16N 13/02

(54) **Dosiervorrichtung für Schmiermittel**

(30) Priorität: 17.02.2001 DE 10107558
(71) Anmelder: LINDAUER DORNIER GESELLSCHAFT M.B.H, 88129 Lindau (DE)
(72) Erfinder: Jäger, Siegfried, 88131 Lindau (DE)

(57) **Zusammenfassung**

Die Erfindung betrifft eine Dosiervorrichtung für Schmiermittel zum dosierten Zuführen des Schmiermittels in einen Druckluftstrom, mit einem Schmiermittelbehälter, einer pneumatisch betätigten Schmiermittelpumpe und einem sich daran anschließenden Einspritzkanal, der gegenüber dem Auslass der Schmiermittelpumpe durch den Stößel des Rückschlagventils abgedichtet ist, wobei der Stößel des Rückschlagventils durch den beim Einspritzvorgang erzeugten Druck des Schmiermittels kurzzeitig öffnet, so das Schmiermittel in den Einspritzkanal gelangen kann. Eine derartige bekannte Dosiervorrichtung soll hinsichtlich ihres Bedienungskomforts und ihrer Fehlersicherheit verbessert werden. Dies wird erfindungsgemäß dadurch erreicht, dass das Rückschlagventil (7) mit einem elektronischen Sensor (19)derart gekoppelt ist, dass der Sensor bei einem definierten Hub des Rückschlagventil-Stößels ein elektrisches Signal abgibt.

## Beschreibung

Die Erfindung betrifft eine Dosiervorrichtung für Schmiermittel gemäß dem Oberbegriff des Patentanspruchs 1.

Aus dem Stand der Technik sind die verschiedensten Dosiervorrichtungen, die auch als Kleinstmengen-Dosiersysteme oder Einspritzöler bezeichnet werden, bekannt. Die Technik dieser Systeme basiert auf einem Luftsprühsystem, d.h. in einen Luftstrom wird eine bestimmte Schmiermittelmenge injiziert und dann auf das zu schmierende Teil mit entsprechendem Druck geblasen.
Derartige Dosiervorrichtungen werden für vielfältige Anwendungszwecke z.B. von der Fa. Willy Vogel AG, Berlin, angeboten

Alle angeboten Systeme weisen meist sehr viele, durch das Bedienpersonal veränderbare Parameter auf, wie z.B. eine Möglichkeit der Einstellung der Schmiermittelmenge. Mechanische Eingriffe und Fehleinstellungen sind möglich. Das hat sehr leicht Bedienfehler zur Folge und ein sicherer Schmiervorgang ist nicht mehr gewährleistet. Eine Funktionskontrolle oder Fehlererkennung beim Schmiervorgang ist nicht oder nur durch einen erheblichen technische Aufwand möglich. Die Handhabung, Fehlersuche, Kontrolle, die vielen Einzelteile und komplizierten Leitungsführungen sind für eine auf minimalsten Fehlerquote ausgerichtete Funktion nicht geeignet.
Je nach Einsatz des Dosiersystems hat ein Defekt desselben schwerwiegende Folgen bis hin zu einem Totalausfall der zu schmierenden Einrichtung oder Maschine.

Die Aufgabe der Erfindung besteht darin, eine Dosiervorrichtung der genannten Art hinsichtlich ihres Bedienungskomforts und ihrer Fehlersicherheit weiterzubilden.

Diese Aufgabe wird erfindungsgemäß durch die kennzeichnenden Merkmale des Patentanspruchs 1 gelöst.

Vorteilhafte Ausgestaltungen und Weiterbildungen der Erfindung sind in den abhängigen Ansprüchen angegeben.

Die Erfindung beruht darauf, dass das Rückschlagventil mit einem elektronischen Sensor derart gekoppelt ist, dass der Sensor bei einem definierten Hub des Rückschlagventils ein elektrisches Signal abgibt. Das elektrische Signal wird zur Auswertung in eine Steuerungs- und/oder Auswerteeinrichtung geleitet und zeigt einen erfolgreichen Einspritzvorgang an.

In der bevorzugten Ausführungsform ist die Schmiermittelpumpe als Kolbenpumpe ausgebildet, mit einer in einer Nadelbuchse geführten Dosiernadel, welche bei jedem Arbeitshub der Pumpe eine definierte Menge Schmiermittel über einen Durchlass aus dem Schmiermittelbehälter entnimmt und in den Einspritzkanal einspritzt. Die jeweils eingespritzte Menge des Schmiermittels wird werkseitig eingestellt und ist in der Regel von außen nicht einstellbar.
Der Kolben der Pumpe ist in Ruhestellung mittels einer Druckfeder vorgespannt, wobei die Federkonstante der Druckfeder derart gewählt ist, dass der Kolben erst bei Anlegen eines definierten Luftdrucks, entgegen der Kraft der Feder, in die Arbeitsstellung bewegt werden kann. Durch die eigentliche Kolbenbetätigung mit Federkraft ist ein immer konstanter Einspritzdruck gewährleistet und nicht mehr abhängig vom Luftdrucksystem und dessen Schwankungen und Einstellung. Dies, zusammen mit einer fest vorgegebenen Schmiermittelmenge, gewährleistet einen relativ gleichbleibenden Hub des Rückschlagventils, sofern sich die Viskosität des Schmiermittels nicht gravierend ändert.

Durch die zu überwindende Federkraft kann ferner ein Leck oder Druckabfall im Druckluftsystem erkannt werden, da dann die Schmiermittelpumpe nicht mehr ordnungsgemäß arbeitet und das Rückschlagventil sich nicht bzw. zuwenig weit bewegt. Dies wird vom Sensor erkannt.

In einer weiteren bevorzugten Ausgestaltung ist vorgesehen, dass das Rückschlagventil einen Ansatz aufweist, dessen Länge und Durchmesser den Mindesthub des Rückschlagventils bestimmt. Der Ansatz erstreckt sich in die Bohrung der Nadelbuchse hinein und verschließt diese zusätzlich.

Als Sensor wird vorzugsweise ein handelsüblicher induktiver oder kapazitiver Näherungssensor eingesetzt.

Vorzugsweise mündet der Einspritzkanal in einen Hauptkanal, der durch ein Pneumatikventil mit Druckluft beaufschlagbar ist, wodurch das im Hauptkanal vorhandene Schmiermittel über mindestens einen Auslass ausgeblasen wird.

In einer bevorzugten Ausbildung der Erfindung können das Ausblasen des Schmiermittels im Hauptkanal und die Betätigung der Schmiermittelpumpe unabhängig voneinander erfolgen. Es kann z.B. abwechselnd einmal Schmiermittel eingespritzt und nachfolgend mehrmals ausgeblasen werden.

Um einen Ausfall der Dosiervorrichtung durch Befüllen des Behälters mit einem falschen oder ungeeigneten Schmiermittel zu vermeiden, ist in einer Weiterbildung der Erfindung vorgesehen, dass der Schmiermitteltank nur über eine spezielle Füllarmatur mit Schmiermittel befüllbar ist.

Die Konstruktion des Dosiervorrichtung wurde so gewählt, dass eine hohe Grundgenauigkeit des Ausstoßvolumens aufgrund weniger Fertigungsteile und deren Toleranzen gegeben ist. Die ausgestoßene Schmiermittelmenge ist immer gleich und konstant eingestellt. Fehleinstellungen sind nicht mehr möglich.
Alle Funktionen des Dosiersystems sind mittels Software steuerbar.
Die Dosiervorrichtung besitzt lediglich einen zentralen Luftdruckanschluss, der alle Funktionsgruppen speist.

Der Sensor erkennt direkt oder indirekt einen Defekt an dem die Dosiervorrichtung speisenden Luftdrucksystem, einen leeren Schmiermittelbehälter und Fehlmengen des eingespritzten Schmiermittels bzw. Ausbleiben des Einspritzvorgangs.

Weitere Einzelheiten und Merkmale der Erfindung ergeben sich aus der nachstehenden Beschreibung eines in den Zeichnungen dargestellten Ausführungsbeispiels.
Es zeigt:
- Figur 1:: die Dosiervorrichtung mit dem Kolben der Pumpe in vorderer (Ruhe)Stellung, in Schnittdarstellung;
- Figur 2:: die Dosiervorrichtung mit der Verbindung des Schmiermittel-Einspritzkanals zum Druckluft-Hauptkanal;
- Figur 3:: die Dosiervorrichtung mit dem Kolben der Pumpe in zurückgezogener (Arbeits)Stellung, in Schnittdarstellung:

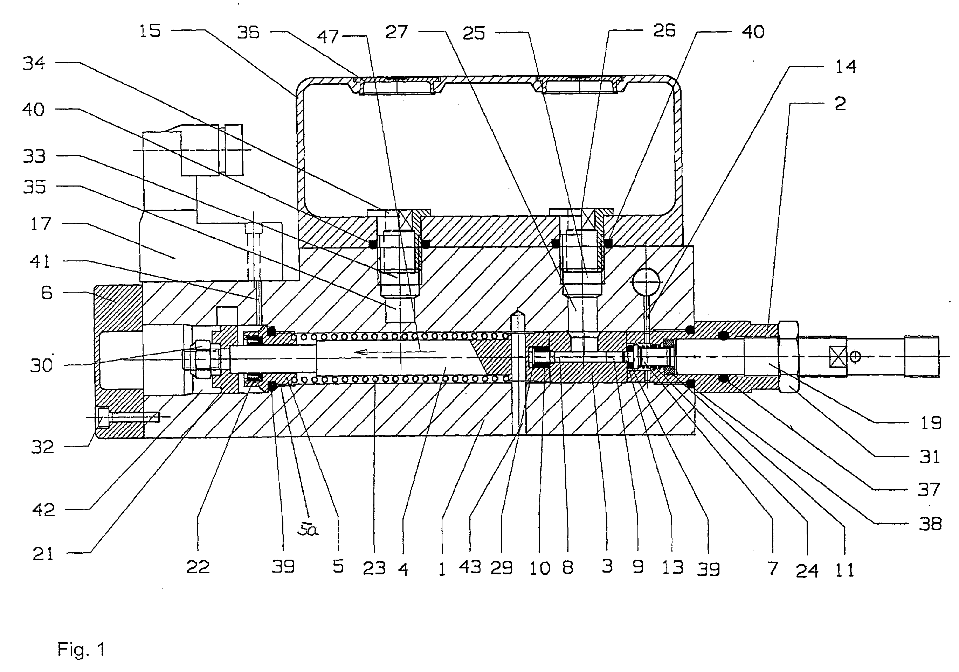

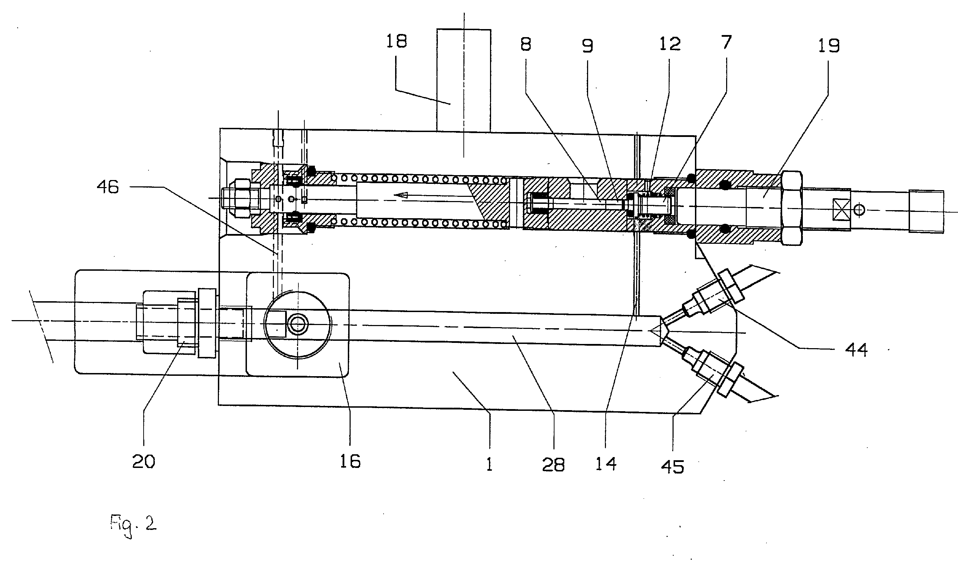

Wie aus den Figuren 1 und 2 ersichtlich wird, weist die Dosiervorrichtung ein vorzugsweise aus Metall gefertigtes Gehäuse 1 auf. Auf das Gehäuse 1 ist ein Behälter 15 aufgesteckt, der mit einem flüssigen Schmiermittel befüllt wird. Der Behälter 15 verfügt über zwei an der Unterseite angeordnete Mundstücke 26, 34, welche in entsprechenden Öffnungen 25, 33 des Gehäuses 1 gesteckt sind, die die Halterungen für den Behälter bilden. Die Abdichtung zwischen Behälter und Gehäuse 1 erfolgt vorzugsweise über O-Ringe 40. Das Befüllen des Behälters 15 erfolgt über eine am Gehäuse 1 angeordnete Füllarmatur 18, siehe Figur 2, die über einen Durchlass 35 mit dem Mundstück 34 des Behälters 15 verbunden ist. Über mindestens einen Deckel 36 wird der Behälter 15 entlüftet.

Das Gehäuse 1 verfügt über eine Bohrung, in der eine Dosierpumpe angeordnet ist. Die Dosierpumpe weist einen, durch eine Druckfeder 23 unter Vorspannung gehaltenen Pneumatikkolben 21 auf. Der Kolben 21 ist über eine, in einer Stangenbuchse 5 gelagerte Kolbenstange 4 mit einer Dosiernadel 8 verbunden, welche in einer Bohrung 9 einer Nadelbuchse 3 beweglich geführt ist. Ein Dichtring 22 dient zur Abdichtung zwischen Kolbenstange 4 und Stangenbuchse 5 und eine Mutter 30 dient der Verbindung von Kolben 21 und Kolbenstange 4. Die Dosiernadel 8 ist einseitig in einer in der Kolbenstange 4 angeordneten Haltebuche 10 gelagert und wird durch einen Sicherungsring 29 gehalten. In die Bohrung 9 mündet ein Durchlass 27, über welchen das Schmiermittel vom Behälter 15 bis zur Dosiernadel 8 gelangt und dort ansteht.

Die Arbeitskammer 42 der Kolbenpumpe wird von einem Pneumatikventil 17 über einen Kanal 41 mit Druckluft beaufschlagt.

Das kolbenseitige Ende der Dosierpumpe ist von einem Deckel 6 abgedeckt, der mittels einer Schraube 32 lösbar befestigt ist.

Die Öffnung der Bohrung 9 der Nadelbuchse 3 ist von dem Ventildeckel eines Rückschlagventil 7 verschlossen. Der Ventildeckel ist durch eine Druckfeder 24 an die Nadelbuchse gepresst. Zwischen dem Ventildeckel und der Nadelbuchse 3 liegt ein O-Ring 39 dichtend an. Der Ventildeckel weist einen Ansatz 13 auf, der sich in Geschlossenstellung des Rückschlagventils 7 in die Bohrung der Nadelbuchse 3 hinein erstreckt.

Koaxial zum Ventilschaft des Rückschlagventils 7 ist ein Näherungssensor 19 angeordnet, der die axiale Ventilbewegung erfasst und in elektrische Signale umsetzt. Der Ventilschaft wird in einer Ringscheibe 11 geführt, die auch den minimalen Abstand zwischen Sensor 19 und Rückschlagventil 7 vorgibt. Der axiale Abstand zwischen Sensor 19 und Rückschlagventil 7 ist einstellbar.

Das Rückschlagventil 7 und der Sensor 19 sind beide in einem Sensoradapter 2 gehalten, wobei der Sensor 19 mittels der Mutter 31 mit dem Sensoradapter 2 verschraubt ist. Die Abdichtung zum Gehäuse 1 bzw. zum Sensor 19 erfolgt mittels O-Ringen 37, 38.

Der Ventilraum ist mit einem Einspritzkanal 14 verbunden, der in einen, ebenfalls im Gehäuse 1 angeordneten Hauptkanal 28 mündet, siehe auch Figur 2.

An einem Ende des Hauptkanals 28 befindet sich ein Pneumatikventil 16 zur gesteuerten Beaufschlagung des Hauptkanals 28 mit Druckluft. Angrenzend an das Pneumatikventil 16 befindet sich der Druckluftanschluss 20, über den die gesamte Vorrichtung zentral mit Druckluft versorgt wird.
Am anderen Ende befindet sich mindestens ein Auslass 44, 45, über den der Druckluftstrom das Schmiermittel in Schlauch- bzw. Rohrleitungen zu den Schmierstellen leitet.

Das Pneumatikventil 17 wird über einen Überströmkanal 46, der vom Druckluftanschluss bzw. Druckluftseitigen Anschluss des Ventil 16 bis zum Ventil 17 führt, mit Druckluft versorgt.

### Zur Funktionsweise:

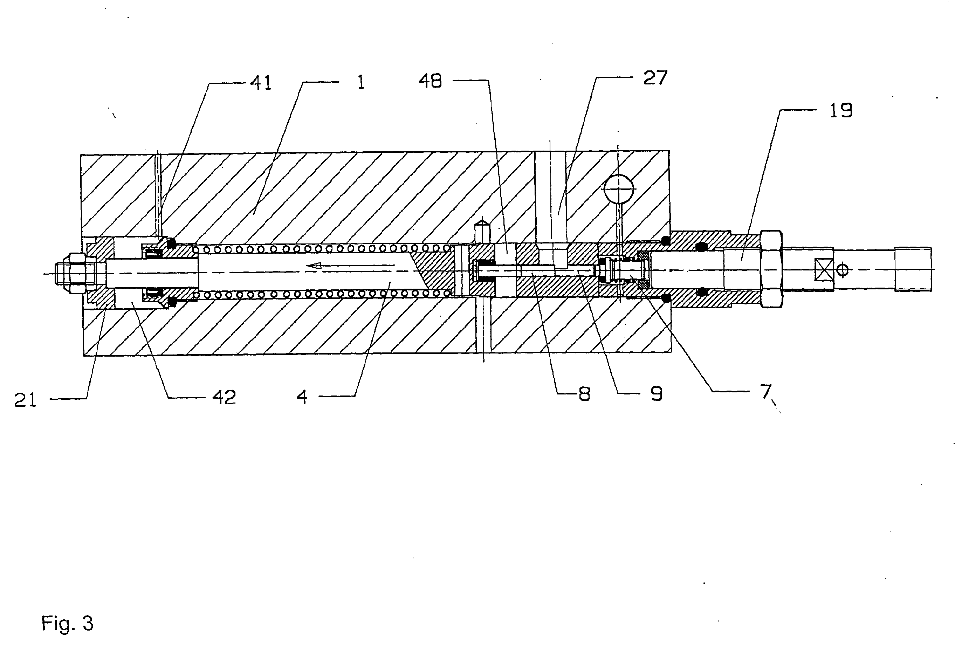

Durch ein elektrisches Signal, z.B. ausgelöst durch eine Steuereinrichtung, wird das Pneumatikventil 17 angesteuert, wodurch über den Kanal 41 Druckluft in die Arbeitskammer 42 der Kolbenpumpe strömt. Daraufhin wird der Kolben 21 und die Kolbenstange 4 entgegen der Kraft der Druckfeder 23 in Richtung des Pfeils 47 gedrückt . Dadurch bewegt sich auch die Dosiernadel 8 in die gleiche Richtung und gibt den Durchlass 27 zur Bohrung 9 der Nadelbuchse frei, wodurch das Schmiermittel über den Durchlass 27 einströmen kann und nun am - noch geschlossenen - Rückschlagventil 7 ansteht. Die Federkonstante der Druckfeder 23 ist derart gewählt, dass der Pneumatikkolben nur arbeitet, wenn ein vordefinierter Mindestdruck, z.B. 4 bar, am Pneumatikventil 17 anliegt.
Diese Stellung ist in Figur 3 dargestellt. Der entsprechende Hub der Kolbenanordnung ist mit Bezugsziffer 48 bezeichnet.

Durch ein weiteres elektrisches Signal wird das Pneumatikventil 17 entlüftet, d.h. die in der Arbeitskammer 42 befindliche Druckluft wird über den Kanal 41 schlagartig abgeleitet. Die Kolbenanordnung 4, 21 samt Dosiernadel 8 schnellt durch die Kraft der Feder 23 in ihre Ausgangslage (Figur 1) zurück. Die dabei auf das Schmiermittel in der Bohrung 9 der Nadelbuchse 3 wirkende Druckkraft öffnet den am Ausgang der Bohrung 9 anliegenden Ventildeckel des Rückschlagventils 7, wodurch das Schmiermittel unter Druck in den Ventilraum 12 und von dort in den Einspritzkanal 14 strömt.

Durch den am Rückschlagventil 7 angeordneten Ansatz 13 wird erreicht, dass das Schmiermittel erst in den Ventilraum strömen kann, wenn das Rückschlagventil einen gewünschten Mindesthub ausführt, der etwa der Länge des Ansatzes 13 entspricht.

Das Schmiermittel gelangt nachfolgend vom Einspritzkanal 14 in den Hauptkanal 28 und wird von dort über die beiden Auslässe 44, 45 ausgeblasen und zu den Schmierstellen geleitet. Das Ausblasen des Hauptkanals 28 erfolgt unabhängig vom Einspritzvorgang und wird über das Pneumatikventil 16 gesteuert. Dadurch ist es z.B. möglich, zwischen jeweils zwei Einspritzvorgängen nicht nur einen, sondern bei Bedarf mehrere kurze Ausblasvorgänge durchzuführen, um nur einen Teil der in den Hauptkanal 28 eingespritzten Menge an Schmiermittel zu den Schmierstellen zu befördern.

Jeder Einspritzvorgang, genauer gesagt der Öffnungshub des Rückschlagventils 7, wird durch den Näherungssensor 19 erfasst und kann von der Maschinensteuerung ausgewertet werden. Gibt der Sensor 19 ein Signal ab, so bedeutet dies, dass ausreichend Schmiermittel in den Einspritzkanal (Hauptkanal) gefördert wurde. Wird zu wenig oder gar kein Schmiermittel gefördert, z.B. weil der Behälter leer ist, so fehlt das Kontrollsignal.

Die korrekte Menge Schmiermittel kann aber nur gefördert werden unter folgenden Bedingungen:
Das Pneumatikventil 17 muss angesteuert werden. Das Pneumatikventil 17 muss funktionieren und es muss Druckluft über dem eingestellten Mindestdruck, z.B. 4 bar, anliegen. Defekte am Pneumatikventil 17 werden durch den Sensor 19 indirekt erfasst und es werden automatisch Leckagen im Zuführschlauch oder der Ausfall des Druckluftsystems überwacht.
Ferner wird durch den Sensor 19 die komplette Einspritzmechanik überwacht. Eine Leckage im Pneumatikzylinder 21 selbst, sowie ein Verschleiss der Zylinderdichtungen usw. wird erkannt.

Die Funktion des Ausblasventils 16 kann in bekannter Weise mittels Strommessung überwacht werden.

### Bezugszeichenliste

- 1: Gehäuse
- 2: Sensoradapter
- 3: Nadelbuchse
- 4: Kolbenstange
- 5: Stangenbuchse
- 6: Deckel
- 7: Rückschlagventil
- 8: Dosiernadel
- 9: Bohrung (in Nadelbuchse)
- 10: Haltebuchse
- 11: Ringscheibe
- 12: Ventilraum
- 13: Ansatz (R-Ventil)
- 14: Einspritzkanal
- 15: Behälter
- 16: Pneumatikventil
- 17: Pneumatikventil
- 18: Füllarmatur
- 19: Näherungssensor
- 20: Druckluftanschluss
- 21: Pneumatikkolben
- 22: Dichtring
- 23: Druckfeder
- 24: Druckfeder
- 25: Öffnung
- 26: Mundstück
- 27: Durchlass
- 28: Hauptkanal
- 29: Sicherungsring
- 30: Mutter
- 31: Mutter
- 32: Schraube
- 33: Öffnung
- 34: Mundstück
- 35: Durchlass
- 36: Deckel (Behälter)
- 37: O-Ring
- 38: O-Ring
- 39: O-Ring
- 40: O-Ring
- 41: Kanal
- 42: Arbeitskammer
- 43: Montagebohrung
- 44: Auslass
- 45: Auslass
- 46: Überströmkanal
- 47: Richtungspfeil
- 48: Hub

## Patentansprüche

1. Dosiervorrichtung für Schmiermittel zum dosierten Zuführen des Schmiermittels in einen Druckluftstrom,
mit einem Schmiermittelbehälter, einer pneumatisch betätigten Schmiermittelpumpe und einem sich daran anschließenden Einspritzkanal, der gegenüber dem Auslass der Schmiermittelpumpe durch den Stößel eines Rückschlagventils abgedichtet ist, wobei der Stößel durch den beim Einspritzvorgang erzeugten Druck des Schmiermittels den Auslass kurzzeitig öffnet, so das Schmiermittel in den Einspritzkanal gelangen kann,
**dadurch gekennzeichnet,**
**dass** der Stößel des Rückschlagventils (7) mit einem elektronischen Sensor (19) derart gekoppelt ist, dass der Sensor bei einem definierten Hub des Stößels ein elektrisches Signal abgibt.

2. Dosiervorrichtung nach Anspruch 1, **dadurch gekennzeichnet, dass** die Schmiermittelpumpe als Kolbenpumpe ausgebildet ist, mit einer in einer Nadelbuchse (3) geführten Dosiernadel (8), welche bei jedem Arbeitshub der Pumpe eine definierte Menge Schmiermittel über einen Durchlass (27) aus dem Schmiermittelbehälter (15) entnimmt und in den Einspritzkanal (14) einspritzt.

3. Dosiervorrichtung nach Anspruch 1 oder 2, **dadurch gekennzeichnet, dass** der Kolben (21) der Pumpe in Ruhestellung mittels einer Druckfeder (23) vorgespannt ist, wobei die Federkonstante der Druckfeder derart gewählt ist, dass der Kolben erst bei Anliegen eines definierten Luftdrucks in die Arbeitsstellung bewegt wird.

4. Dosiervorrichtung nach einem der vorhergehenden Ansprüche, **dadurch gekennzeichnet, dass** der Stößel des Rückschlagventils (7) einen Ansatz (13) aufweist, dessen Länge den Mindesthub des Stößels bestimmt.

5. Dosiervorrichtung nach einem der vorhergehenden Ansprüche, **dadurch gekennzeichnet, dass** das elektrische Signal zur Auswertung einer Steuerungs- und/oder Auswerteeinrichtung zugeführt wird und zur Überwachung eines erfolgreichen Einspritzvorgangs verwendet wird.

6. Dosiervorrichtung nach einem der vorhergehenden Ansprüche, **dadurch gekennzeichnet, dass** der Sensor (19) ein induktiver oder kapazitiver Näherungssensor ist.

7. Dosiervorrichtung nach einem der vorhergehenden Ansprüche, **dadurch gekennzeichnet, dass** der Einspritzkanal (14) in einen Hauptkanal (28) mündet, der durch ein Pneumatikventil (16) mit Druckluft beaufschlagt ist, wodurch das im Hauptkanal vorhandene Schmiermittel über mindestens einen Auslass (44, 45) ausgeblasen wird.

8. Dosiervorrichtung nach einem der vorhergehenden Ansprüche, **dadurch gekennzeichnet, dass** das Ausblasen des Hauptkanals (28) und die Betätigung der Schmiermittelpumpe unabhängig voneinander erfolgen.

9. Dosiervorrichtung nach einem der vorhergehenden Ansprüche, **dadurch gekennzeichnet, dass** der Schmiermitteltank (15) nur über eine spezielle Füllarmatur (18) mit Schmiermittel befüllbar ist.
